# EUROPÄISCHE PATENTANMELDUNG

(11) **EP 0 848 468 A1**
(43) Veröffentlichungstag der Anmeldung: **17.06.1998**
(21) Anmeldenummer: 97250336.1
(22) Anmeldetag: 11.11.1997
(51) Int. Cl.: H02B 1/28

(54) **Schaltschrank mit einer abgedichteten Tür**

(30) Priorität: 15.11.1996 DE 29620447 U
(71) Anmelder: SIEMENS AKTIENGESELLSCHAFT, 80333 München (DE)
(72) Erfinder: Meyer, Heike, 60316 Frankfurt (DE)

(57) **Zusammenfassung**

Ein Schaltschrank (1) weist ein Gerüst (2) mit einer Stirnfläche (3) auf, auf die gummielastische flache Dichtungsstreifen (4) zur Abdichtung einer Tür (5) aufgebracht sind. Randseitige Abkantungen (7) der Tür (5) sind mit einer Dichtkante (8) versehen, die unter einem Winkel von etwa 45° nach innen abgewinkelt ist. Durch diese Dichtkanten (8) wird die Abdichtung der Tür verbessert und gleichzeitig im Bereich der mit Scharnieren versehenen Seite der Tür (5) die Beanspruchung des zugehörigen Dichtungsstreifens (4) verringert.

## Beschreibung

Die Erfindung betrifft einen Schaltschrank mit einem aus Profilabschnitten gebildeten, eine Stirnfläche aufweisenden Gerüst, das Gerüst abdeckenden Wänden sowie mit einer an Scharnieren gehaltenen, randseitige Abkantungen aufweisenden Tür und einem auf die Stirnfläche des Gerüstes aufgebrachten flachen Dichtungsstreifen aus gummielastischem Material zur Abdichtung der geschlossenen Tür gegenüber der Stirnseite des Gerüstes.

Ein Schaltschrank dieser Art ist durch die DE 44 39 622 C1 bekanntgeworden. Hierbei ist außer dem flachen Dichtungsstreifen ein weiterer, in eine Nut der Profilabschnitte eingelegter Dichtungsstreifen vorhanden, gegen den sich die randseitigen Abkantungen der Tür legen. Der flache Dichtungsstreifen liegt im geschlossenen Zustand der Tür an den Türinnenflächen an, die sich an die Abkantungen nach innen anschließen. Diese Dichtungsanordnung erfordert neben einer relativ komplizierten Profilform des Gerüstes zwei unterschiedliche Dichtungsstreifen.

Eine andere bekannte Dichtungsanordnung für Schaltschränke nach der DE 36 25 105 C1 ist unter Verwendung nur eines flachen Dichtungstreifens aufgebaut, der an der Innenseite der Tür angebracht ist und der mit einer in Richtung der Tür vom Gerüst abragenden Abkantung zusammenwirkt. Hierdurch ist einerseits der Aufwand an Dichtungsmaterial verringert, andererseits aber die Herstellung der Profilelemente des Gerüstes erschwert.

Der Erfindung liegt hiervon ausgehend die Aufgabe zugrunde, eine verfügbare Profilform mit vorteilhaften Eigenschaften mit einem einfachen Aufbau des Dichtungssystems zu vereinigen.

Gemäß der Erfindung wird diese Aufgabe dadurch gelöst, daß die Abkantungen der Tür zur Anlage an dem Dichtungstreifen eine unter einem Winkel von etwa 45° einwärts abgewinkelte Dichtkante besitzen. Hierdurch wird ein günstigeres Zusammenwirken zwischen der Tür und dem Dichtungsstreifen am gesamten Umfang der Tür erreicht. Insbesondere wird eine unzuträgliche Beanspruchung des Dichtungsstreifens an der Scharnierseite der Tür vermieden.

Es wurde bereits vorgeschlagen, einen Dichtungsstreifen an der Innenseite der Abkantungen der Tür eines Schaltschrankes anzubringen (EP 0 584 896 B1). Dies ermöglicht einerseits die Benutzung von Profilelementen mit ebener Stirnfläche, erfordert aber andererseits eine spezielle hochwertige Haftschicht, da hier eine Scher- und Zugbeanspruchung auftreten kann.

Für die Zwecke der Erfindung sind die an sich bekannten Dichtungsstreifen aus gummieleastischem Material mit flachem, rechteckigem Querschnitt gut geeignet. Eine verbesserte Dichtwirkung bei gleichzeitig verminderter Beanspruchung, insbesondere an der Scharnierseite der Tür, ist jedoch im Rahmen der Erfindung dadurch zu erzielen, daß der Dichtungsstreifen eine keilförmige bzw. unregelmäßig viereckige Querschnittsform besitzt, wobei an der Stirnfläche des Gerüstes die größere Dickenabmessung außenliegend und die kleinere Dickenabmessung innenliegend angeordnet ist.

Es kann auch vorteilhaft sein, an dem scharnierseitigen Bereich der Stirnfläche einen Dichtungsstreifen mit unregelmäßig viereckiger Querschnittsform und außenliegender größerer Dickenabmessung und an den übrigen Bereichen der Stirnfläche Dichtungsstreifen mit rechteckiger Querschnittsform und einer der kleineren Dickenabmessung des Dichtungsstreifens mit unregelmäßiger viereckiger Querschnittsform anzubringen.

Die Dichtungsstreifen können zur Befestigung an der Stirnfläche des Gerüstes in bekannter Weise mit einer selbstklebenden Haftschicht versehen sein.

Die Erfindung wird im folgenden anhand der in den Figuren dargestellten Ausführungsbeispiele näher erläutert.

Die Figur 1 zeigt einen Schaltschrank mit geöffneter Tür in einer Frontansicht.

In der Figur 2 ist ein Gerüstelement mit aufliegender Tür im Querschnitt gezeigt, wobei auf dem Gerütselement ein Dichtungsstreifen mit rechteckigem Querschnitt angebracht ist.

Die Figur 3 zeigt eine Anordnung entsprechend der Figur 2 mit einem Dichtungstreifen, der eine keilförmige bzw. unregelmäßig viereckige Querschnittsform besitzt.

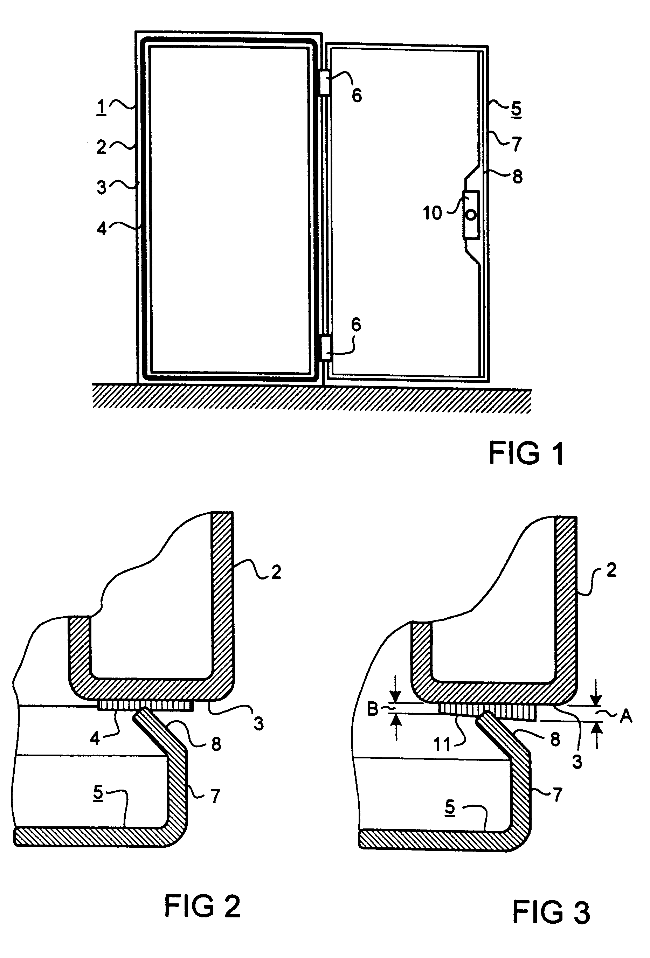

Der in der Figur 1 geöffnet dargestellte Schaltschrank 1 weist in bekannter Weise ein Gerüst 2 mit einer frontseitigen Stirnfläche 3 auf. Dichtungstreifen 4 erstrecken sich über den gesamten Umfang der Stirnfläche 3. Eine Tür 5 ist an Scharnieren 6 gehalten und besitzt rechtwinklige Abkantungen 7, an die sich Dichtkanten 8 anschließen, die unter einem Winkel von etwa 45° gleichfalls nach innen abgekantet sind. Diese Dichtkanten 8 legen sich beim Schließen der Tür mittels eines Schlosses 10 gegen die Dichtungsstreifen 4.

Einzelheiten der Dichtungsanordnung zeigen die Figuren 2 und 3.

In der Figur 2 ist gezeigt, daß Dichtungsstreifen 4 einen flachen rechteckigen Querschnitt aufweist. Zur Befestigung an der Stirnfläche 3 des Gerüstes 2 kann eine herkömmliche Haftschicht benutzt werden.

Gemäß der Figur 3 ist ein Dichtungstreifen 11 mit einer unregelmäßigen viereckigen Querschnittsform vorgesehen. Die größere Dickenabmessung A liegt dabei an der Außenseite der Stirnfläche 3, während die kleinere Dickenabmessung innenliegend angeordnet ist. Hierdurch wird erreicht, daß an der Scharnierseite der Tür 5 beim Einschwenken in die Schließstellung die Dichtkante 8 der Tür 5 zunächst auf einem Bereich des Dichtungsstreifens 11 mit geringerer Materialdicke aufsetzt und dann zunehmend in den Bereich mit größerer Materialdicke gelangt. Dies ergibt eine vorteilhaft niedrige Beanspruchung des Dichtungsstreifens 11 mit guter Dichtigkeit in der Schließstellung der Tür 5.

Es kann zweckmäßig sein, Dichtungsstreifen 4 und 11 in der Weise zu kombinieren, daß nur an der Scharnierseite der Tür 5 ein Dichtungsstreifen 11 in der Anordnung gemäß der Figur 3 verwendet wird, während an den übrigen Teilen der Stirnfläche 3 Dichtungsstreifen 4 gemäß der Figur 2 benutzt werden. Vorzugsweise entspricht dabei die Dicke der Dichtungsstreifen 4 der Dickenabmessung B in der Figur 3.

## Patentansprüche

1. Schaltschrank (1) mit einem aus Profilabschnitten gebildeten, eine Stirnfläche (3) aufweisenden Gerüst (2), das Gerüst (2) abdeckenden Wänden sowie mit einer an Scharnieren (6) gehaltenen, randseitige rechtwinklige Abkantungen (7) aufweisenden Tür (5) und einem auf die Stirnfläche (3) des Gerüstes (2) aufgebrachten flachen Dichtungsstreifen (4; 11) aus gummielastischem Material zur Abdichtung der geschlossenen Tür (5) gegenüber der Stirnfläche (3) des Gerüstes (2),
**dadurch gekennzeichnet, daß**
die Abkantungen (7) der Tür (5) zur Anlage an dem Dichtungstreifen (4; 11) eine unter einem Winkel von etwa 45° einwärts abgewinkelte Dichtkante (8) besitzen.

2. Schaltschrank nach Anpruch 1,
**dadurch gekennzeichnet, daß**
der Dichtungsstreifen (4) eine rechteckige Querschnittsform besitzt.

3. Schaltschrank nach Anspruch 1,
**dadurch gekennzeichnet, daß**
der Dichtungsstreifen (11) eine keilförmige bzw. unregelmäßig viereckige Querschnittsform besitzt, wobei an der Stirnfläche (3) des Gerüstes (2) die größere Dickenabmessung (A) außenliegend und die kleinere Dickenabmessung (B) innenliegend angeordnet ist.

4. Schaltschrank nach den Ansprüchen 2 und 3,
**dadurch gekennzeichnet, daß**
an dem scharnierseitigen Bereich der Stirnfläche (3) ein Dichtungsstreifen (11) mit unregelmäßig viereckiger Querschnittsform und außenliegender größerer Dickenabmessung (A) und an den übrigen Bereichen der Stirnfläche (3) Dichtungsstreifen (4) mit rechteckiger Querschnittsform und einer der kleineren Dickenabmessung (B) des Dichtungsstreifens (11) mit unregelmäßiger viereckiger Querschnittsform entsprechender Dickenabmessung angebracht sind.

5. Schaltschrank nach Anspruch 2 oder 3,
**dadurch gekennzeichnet, daß**
der Dichtungsstreifen (4; 11)) selbstklebend ausgerüstet ist.
